# FASCICULE DE BREVET EUROPEEN

(11) **EP 3 586 319 B1**
(45) Date de publication et mention de la délivrance du brevet: **06.09.2023**
(21) Numéro de dépôt: 18706821.8
(22) Date de dépôt: 13.02.2018
(51) Int. Cl.: H04W 4/02, H04W 4/029, H04W 4/20, G07C 9/00

(54) **DISPOSITIF DE DÉTERMINATION DE TRAJECTOIRE**
TRAJEKTORIEBESTIMMUNGSVORRICHTUNG
TRAJECTORY DETERMINING DEVICE

(30) Priorité: 23.02.2017 FR 1751454; 31.07.2017 FR 1757289
(43) Date de publication de la demande: 01.01.2020
(73) Titulaire: Intersec, 92085 Paris La Defense Cedex (FR)
(72) Inventeur: THOUEMENT, Sébastien, 75012 Paris (FR); CUNY, Pierre-Louis, 92200 Neuilly sur Seine (FR); COÏC, Jean-Marc, 92340 Bourg la Reine (FR)
(74) Mandataire: Cabinet Netter
(86) Numéro de dépôt international: PCT/FR2018/050347
(87) Numéro de publication internationale: WO 2018/154217

(56) Documents cités:
- WO-A1-2017/021600
- US-A1- 2014 114 561

## Description

L'invention concerne le domaine de la détection de trajectoire, plus particulièrement de manière passive, à partir de données de signalisation associées à un dispositif mobile.

Il est complexe de déterminer les flux de personnes qui se déplacent entre divers endroits. Pour un endroit donné, il est possible de déterminer des flux de manière statistique, en mesurant humainement le nombre de personnes qui rentrent et sortent. Cependant, ces méthodes sont peu fiables, présentent un coût important, et sont pauvres en informations contextuelles. En effet, il n'est pas possible de savoir quelle est le lieu d'origine des personnes comptées, quels sont les moyens de transport utilisés, etc.

L'invention vient améliorer la situation. À cet effet, l'invention propose un dispositif de détermination de trajectoire, comprenant une mémoire pour recevoir des données de signalisation associant des identifiants de dispositif mobile de communication, des marqueurs de temps et des identifiants de signalisation, certains au moins des identifiants de signalisation désignant une cellule de localisation, un classificateur capable, pour un identifiant de dispositif mobile de communication donné, de marquer les données de signalisation qui lui sont associées avec un marqueur de déplacement indiquant un état choisi parmi une liste comprenant au moins un mouvement et un arrêt court, et un analyseur capable de traiter les données de signalisation marquées en fonction des marqueurs de déplacement afin de produire des données de trajectoire associant d'une part un identifiant de dispositif mobile de communication donné et d'autre part une suite de marqueurs de déplacement associés chacun à une cellule de localisation et à un marqueur de temps, de sorte que deux marqueurs de déplacement dont les marqueurs de temps indiquent qu'ils se succèdent indiquent deux mouvements ou indiquent au plus un unique arrêt court, en appliquant l'une au moins des règles suivantes :
a) la modification de marqueurs de déplacement quelconques en marqueurs de déplacement indiquant un arrêt court, lorsque, pour deux marqueurs de déplacement indiquant un arrêt court associé à une unique cellule de localisation, le nombre de marqueurs de déplacements dont les marqueurs de temps indiquent qu'ils sont entre ces deux marqueurs de déplacement est inférieur ou égal à 4,
b) la modification de marqueurs de déplacement indiquant un mouvement en marqueurs de déplacement indiquant un arrêt court lorsque les marqueurs de temps qui leur sont associés indiquent qu'ils sont précédés et suivis par des marqueurs de déplacement indiquant un arrêt court et que les marqueurs de temps associés à ces derniers indiquent une durée inférieure à un premier seuil,
c) la modification de marqueurs de déplacement indiquant un mouvement en marqueurs de déplacement indiquant un arrêt court lorsque les marqueurs de temps qui leur sont associés indiquent qu'ils sont précédés et suivis par des marqueurs de déplacement indiquant un arrêt court qui sont associés à une même cellule de localisation et que les marqueurs de temps associés à ces derniers indiquent une durée inférieure à un deuxième seuil,
d) la modification de marqueurs de déplacement indiquant un arrêt court en marqueurs de déplacement indiquant un mouvement lorsque les marqueurs de temps qui leur sont associés indiquent qu'ils sont précédés et suivis par des marqueurs de déplacement indiquant un mouvement et que les marqueurs de temps associés à ces derniers indiquent une durée inférieure à un troisième seuil,
   l'analyseur étant en outre agencé pour appliquer, après l'application d'au moins l'une des règles a), b), c) et d), la règle suivante:
   e) la fusion de marqueurs de déplacement indiquant un arrêt court dont les marqueurs de temps indiquent qu'ils sont consécutifs, et l'association au marqueur de déplacement résultant de la cellule de localisation associée aux marqueurs de déplacement dont les marqueurs de temps représentent la durée la plus importante et d'un marqueur de temps correspondant à la somme des durées des marqueurs de temps associés. Un tel dispositif est divulgué par WO 2017/021600 A1.

Le dispositif d'après l'invention comprend en outre un extracteur agencé pour déterminer parmi les données de trajectoires des couples de marqueurs de déplacement associés à un même identifiant de dispositif mobile de communication dont les marqueurs de temps et les cellules de localisation associés définissent une durée excédant un premier seuil et une distance excédant un deuxième seuil, et, pour un couple de marqueurs de déplacement donné, pour regrouper en un ensemble candidat les données de signalisation associées à l'identifiant de dispositif mobile de communication correspondant et dont les marqueurs de temps sont compris entre les deux marqueurs de temps du couple de marqueurs de déplacement donné, et un détecteur agencé pour déterminer dans un ensemble candidat donné si des données de signalisation associées à des marqueurs de temps remplissent l'une des conditions suivantes :
I) les données de signalisation définissent une vitesse de déplacement supérieure à un troisième seuil, et les marqueurs de temps correspondants sont séparés par une durée supérieure à un quatrième seuil,
II) les marqueurs de temps des données de signalisation sont séparés par une durée supérieure à un cinquième seuil supérieur au quatrième seuil, les identifiants de signalisation associés indiquent une absence d'activité, les données de signalisation définissent une vitesse de déplacement supérieure à la vitesse définie par la division du premier seuil par le deuxième seuil.

Le détecteur est agencé, lorsque l'une des conditions I) et II) est remplie, pour retourner des données de déplacement classifié associant des données de type de déplacement et des données de départ et d'arrivée déterminées à partir des cellules de localisation associées aux données de signalisation et d'un groupe d'emplacements choisis.

Ce dispositif est très avantageux car il permet de déterminer des trajectoires de manière passive, à partir des données de signalisation des dispositifs de communication. Cette détermination est fiable, automatisable et peu coûteuse en moyens humains. De plus, elle permet un traitement statistique permettant de qualifier de nombreuses informations contextuelles.

Dans certaines variantes, le dispositif pourra présenter une ou plusieurs des caractéristiques suivantes :
- le détecteur est agencé, lorsque la condition II) est remplie, pour vérifier que les cellules de localisation associées ou celles de données de signalisation dont les marqueurs de temps sont proches dans le temps désignent un emplacement appartenant à un groupe d'emplacements choisis avant de retourner des données de déplacement classifié,
- le classificateur et l'analyseur sont appelés séquentiellement pour produire des données de trajectoire,
- l'analyseur applique la règle a) avant d'appliquer la règle b),
- l'analyseur applique la règle b) avant d'appliquer la règle c),
- l'analyseur applique la règle c) avant d'appliquer la règle d), et
- le détecteur est agencé pour déterminer si l'une des conditions I) et II) s'applique à des données de signalisation situées entre des marqueurs de temps associés à des données de déplacement classifié, et pour répéter cette détermination sur les données de déplacement classifié résultantes, jusqu'à ce qu'aucune des conditions I) et II) ne soit remplie.

L'invention concerne également un procédé de détermination de trajectoire comprenant les opérations suivantes :
a) recevoir des données de signalisation associant des identifiants de dispositif mobile de communication, des marqueurs de temps et des identifiants de signalisation, certains au moins des identifiants de signalisation désignant une cellule de localisation,
b) pour un identifiant de dispositif mobile de communication donné, de marquer les données de signalisation qui lui sont associées avec un marqueur de déplacement indiquant un état choisi parmi une liste comprenant au moins un mouvement et un arrêt court,
c) traiter les données de signalisation marquées en fonction des marqueurs de déplacement afin de produire des données de trajectoire associant d'une part un identifiant de dispositif mobile de communication donné et d'autre part une suite de marqueurs de déplacement associés chacun à une cellule de localisation et à un marqueur de temps, de sorte que deux marqueurs de déplacement dont les marqueurs de temps indiquent qu'ils se succèdent indiquent deux mouvements ou indiquent au plus un unique arrêt court, en appliquant l'une au moins des règles suivantes :
   c1) la modification de marqueurs de déplacement quelconques en marqueurs de déplacement indiquant un arrêt court, lorsque, pour deux marqueurs de déplacement indiquant un arrêt court associé à une unique cellule de localisation, le nombre de marqueurs de déplacements dont les marqueurs de temps indiquent qu'ils sont entre ces deux marqueurs de déplacement est inférieur ou égal à 4,
   c2) la modification de marqueurs de déplacement indiquant un mouvement en marqueurs de déplacement indiquant un arrêt court lorsque les marqueurs de temps qui leur sont associés indiquent qu'ils sont précédés et suivis par des marqueurs de déplacement indiquant un arrêt court et que les marqueurs de temps associés à ces derniers indiquent une durée inférieure à un premier seuil,
   c3) la modification de marqueurs de déplacement indiquant un mouvement en marqueurs de déplacement indiquant un arrêt court lorsque les marqueurs de temps qui leur sont associés indiquent qu'ils sont précédés et suivis par des marqueurs de déplacement indiquant un arrêt court qui sont associés à une même cellule de localisation et que les marqueurs de temps associés à ces derniers indiquent une durée inférieure à un deuxième seuil,
   c4) la modification de marqueurs de déplacement indiquant un arrêt court en marqueurs de déplacement indiquant un mouvement lorsque les marqueurs de temps qui leur sont associés indiquent qu'ils sont précédés et suivis par des marqueurs de déplacement indiquant un mouvement et que les marqueurs de temps associés à ces derniers indiquent une durée inférieure à un troisième seuil,
      et,
      après l'application d'au moins une des règles c1) à c4), en appliquant la règle suivante:
      c5) la fusion de marqueurs de déplacement indiquant un arrêt court dont les marqueurs de temps indiquent qu'ils sont consécutifs, et l'association au marqueur de déplacement résultant de la cellule de localisation associée aux marque de déplacement dont les marqueurs de temps représentent la durée la plus importante et d'un marqueur de temps correspondant à la somme des durées des marqueurs de temps associés.

Un tel procédé est déjà connu de WO 2017/021600 A1.

Le procédé d'après l'invention comprend en outre les étapes suivantes:
d) déterminer parmi les données de trajectoires des couples de marqueurs de déplacement associés à un même identifiant de dispositif mobile de communication dont les marqueurs de temps et les cellules de localisation associés définissent une durée excédant un premier seuil et une distance excédant un deuxième seuil, et, pour un couple de marqueurs de déplacement donné, pour regrouper en un ensemble candidat les données de signalisation associées à l'identifiant de dispositif mobile de communication correspondant et dont les marqueurs de temps sont compris entre les deux marqueurs de temps du couple de marqueurs de déplacement donné,
e) déterminer dans un ensemble candidat donné si des données de signalisation associées à des marqueurs de temps remplissent l'une des conditions suivantes :
   I) les données de signalisation définissent une vitesse de déplacement supérieure à un troisième seuil, et les marqueurs de temps correspondants sont séparés par une durée supérieure à un quatrième seuil,
   II) les marqueurs de temps des données de signalisation sont séparés par une durée supérieure à un cinquième seuil supérieur au quatrième seuil, les identifiants de signalisation associés indiquent une absence d'activité, les données de signalisation définissent une vitesse de déplacement supérieure à la vitesse définie par la division du premier seuil par le deuxième seuil, f) lorsque l'une des conditions I) et II) est remplie, retourner des données de déplacement classifié (16) associant des données de type de déplacement et des données de départ et d'arrivée déterminées à partir des cellules de localisation associées aux données de signalisation et d'un groupe d'emplacements choisis.

Dans certaines variantes, le procédé pourra présenter une ou plusieurs des caractéristiques suivantes :
- la condition II) comprend en outre de vérifier que les cellules de localisation associées ou celles de données de signalisation dont les marqueurs de temps sont proches dans le temps désignent un emplacement appartenant à un groupe d'emplacements choisis avant de retourner des données de déplacement classifié,
- l'opération c) applique la règle c1) avant la règle c2),
- l'opération c) applique la règle c2) avant d'appliquer la règle c3),
- l'opération c) applique la règle c3) avant d'appliquer la règle c4),
- les opérations c), d), e) et f) sont réalisées dans cet ordre, et
- l'opération e) est répétée sur des données de signalisations situées entre des marqueurs de temps associés à des données de déplacement classifié, ainsi que sur les données de déplacement classifié résultantes, jusqu'à ce qu'aucune des conditions I) et II) ne soit remplie.

L'invention concerne également un produit de programme d'ordinateur comprenant des portions de code de programme pour mettre en oeuvre le procédé selon l'invention.

D'autres caractéristiques et avantages de l'invention apparaîtront mieux à la lecture de la description qui suit, tirée d'exemples donnés à titre illustratif et non limitatif, tirés des dessins sur lesquels :
- la figure 1 représente une vue schématique d'un dispositif selon l'invention,
- la figure 2 représente un exemple de mise en oeuvre d'une fonction par le classificateur de la figure 1,
- les figures 3 à 7 représentent des exemples de mise en oeuvre de fonctions par l'analyseur de la figure 1,
- la figure 8 représente un exemple de mise en oeuvre d'une fonction par l'extracteur de la figure 1, et
- la figure 9 représente un exemple de mise en oeuvre d'une fonction par le détecteur de la figure 1.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant.

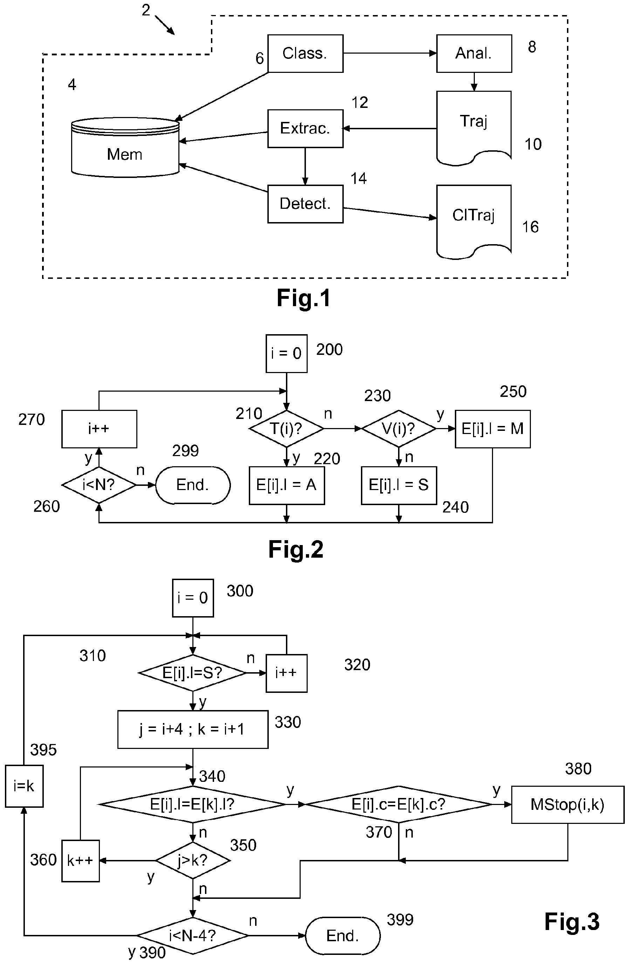

La figure1 représente une vue schématique d'un dispositif de détermination de trajectoire selon l'invention.

Le dispositif 2 comprend une mémoire 4, un classificateur 6 et un analyseur 8, qui produisent ensemble des données de trajectoire 10. Le dispositif 2 comprend en outre un extracteur 12 et un détecteur 14 qui traitent les données de trajectoire 10 et les données reçues dans la mémoire 4 pour produire de des données de déplacement classifié 16.

Dans l'exemple décrit ici, le classificateur 6, l'analyseur 8, l'extracteur 12 et le détecteur 14 sont des éléments accédant directement ou indirectement à la mémoire 4. Ils peuvent être réalisés sous la forme d'un code informatique approprié exécuté sur un ou plusieurs processeurs. Par processeurs, il doit être compris tout processeur adapté aux calculs décrits ci-après. Un tel processeur peut être réalisé de toute manière connue, sous la forme d'un microprocesseur pour ordinateur personnel, d'une puce dédiée de type FPGA ou SoC (« system on chip » en anglais), d'une ressource de calcul sur une grille, d'un microcontrôleur, ou de toute autre forme propre à fournir la puissance de calcul nécessaire à la réalisation décrite plus bas. Un ou plusieurs de ces éléments peuvent également être réalisés sous la forme de circuits électroniques spécialisés tel un ASIC. Une combinaison de processeur et de circuits électroniques peut également être envisagée.

Dans l'exemple décrit ici, la mémoire 4 reçoit des données d'un opérateur de téléphonie mobile (que ce soit en GSM, GPRS, EDGE, UMTS, LTE, ou leur évolution, ou encore un réseau WiFi étendu de type « hotspots »). La mémoire 4 contient l'ensemble des données de signalisation et d'activité d'une, plusieurs ou toutes les zones géographiques desservies par l'opérateur. La mémoire 4 peut être directement accessible ou déportée, répartie sur un ou plusieurs sites, correspondre à l'agrégation de plusieurs stockages distincts, y compris appartenant à plusieurs opérateurs mettant leurs ressources en commun. La mémoire 4 peut être tout type de stockage de données propre à recevoir des données numériques : disque dur, disque dur à mémoire flash (SSD en anglais), mémoire flash sous toute forme, mémoire vive, disque magnétique, stockage distribué localement ou dans le cloud, etc. Les données calculées par le dispositif peuvent être stockées sur tout type de mémoire similaire à la mémoire 4, ou sur celle-ci. Ces données peuvent être effacées après que le dispositif ait effectué ses tâches ou conservées.

Les données de signalisation associent un identifiant de dispositif mobile de communication, un identifiant de signalisation et un marqueur de temps. Le marqueur de temps peut être un marqueur brut ou être accompagné d'une durée. Les dispositifs mobiles de communication peuvent être tout dispositif se connectant à un réseau de téléphonie mobile GSM, GPRS, EDGE, UMTS, LTE ou leur évolution, ou à un réseau WiFi étendu de type « hotspots ». Les identifiants de signalisation peuvent être tirés de toute signalisation sur ces réseaux, ou d'une triangulation à partir de ces identifiants, et/ou à des données de type GPS communiquées par le dispositif.

Le dispositif 2 va dans un premier temps analyser les données de signalisation associées à chaque identifiant de dispositif mobile afin d'adjoindre un marqueur de déplacement à la cellule de localisation correspondant aux identifiants de signalisation et aux marqueurs de temps associés. Ce triplet constitue ce qui sera par la suite appelé un évènement.

La figure 2 représente un exemple d'une fonction mise en oeuvre par le classificateur 6 pour réaliser cela.

Dans une opération 200, le classificateur 6 initialise un indice de boucle i à 0. Ensuite, dans une opération 210, une fonction T() est exécutée pour analyser le marqueur de temps associé à l'identifiant de signalisation d'indice i. La fonction T() détermine le temps qui s'est écoulée entre le marqueur de temps associé à l'identifiant de signalisation d'indice i et le marqueur précédent. Si la durée est supérieure à un seuil choisi (par exemple supérieure à 4 heures, ou 6 heures, ou plus), alors dans une opération 220, un marqueur de déplacement de type arrêt long est associé à la cellule de localisation et au marqueur de temps associés à l'identifiant de signalisation d'indice i.

Les marqueurs de temps de type arrêt long sont importants car ils servent à « découper » les suites d'évènements. Ainsi, tous les traitements décrits ci-après concernent des séquences d'évènements situés entre deux évènements indiquant un arrêt long. À tout le moins, dès qu'un arrêt long est détecté, deux séquences sont générées qui seront traitées de manière indépendante.

Sinon, dans une opération 230, une fonction V() est exécutée pour déterminer la différence d'emplacement entre la cellule de localisation associée à l'identifiant de signalisation d'indice i et celle associée à l'identifiant de signalisation d'indice i précédent. Si la fonction V() indique que la vitesse de déplacement entre ces cellules de localisation est inférieure à une vitesse seuil (égale à environ 10 km/h par exemple), alors dans une opération 240, un marqueur de déplacement de type arrêt court est associé à la cellule de localisation et au marqueur de temps associés à l'identifiant de signalisation d'indice i. Sinon, dans une opération 250, un marqueur de déplacement de type mouvement est associé à la cellule de localisation et au marqueur de temps associés à l'identifiant de signalisation d'indice i. Ainsi, les évènements désignent des paires d'identifiants de signalisation associés à un même dispositif de communication mobile et consécutifs temporellement, et un évènement n'est de type mouvement que si la vitesse de déplacement perçue est plus rapide qu'une vitesse de marche. En variante, la fonction V() pourrait déterminer si la cellule de localisation n'a pas changé entre les deux identifiants de signalisation successifs au lieu de se baser sur la vitesse de déplacement.

Après l'association d'un marqueur par l'une des opérations 220, 240 ou 250, une opération 260 teste si tous les identifiants de signalisation ont été parcourus. Lorsque cela n'est pas le cas, l'indice i est incrémenté dans une opération 270. Sinon, la fonction se termine dans une opération 299.

Une fois que toutes les données ont été marquées, le dispositif 2 peut procéder à leur traitement. En effet, de nombreuses données de signalisation peuvent ne pas représenter un déplacement d'une personne. Par exemple, un dispositif de communication peut être entouré de plusieurs antennes, et pour diverses raisons être attaché successivement à diverses de ces antennes, sans pour autant se déplacer. Dans ce cas, les données de signalisation indiqueront des cellules de localisation distinctes, ce qui suggère un déplacement, alors que le dispositif de communication (et donc son utilisateur) ne s'est pas déplacé. De nombreux autres cas de figures qui ajoutent du bruit peuvent exister et doivent être traités pour obtenir des données de trajet fiables.

Les exemples de fonctions représentées sur les figures 3 à 7 montrent comment l'analyseur 8 traite les données marquées pour en tirer des données de trajet.

La figure 3 représente un exemple de mise en oeuvre d'une première fonction. Cette fonction traite du cas décrit plus haut. Ainsi, lorsqu'entre deux données de localisation dont le marqueur de déplacement indique un arrêt court dans une même cellule de localisation et qui sont séparés par moins de quatre évènements, tous les marqueurs de déplacement sont convertis en arrêt court.

Ainsi, dans une opération 300, un indice de boucle i est initialisé à 0. Ensuite dans une opération 310, un test est réalisé pour déterminé si l'évènement d'indice i a un marqueur de déplacement E[i].l qui indique un arrêt court ou pas. Tant que ce n'est pas le cas, l'indice i est incrémenté dans une opération 320 et le test de l'opération 310 est répété.

Dès qu'un arrêt court est détecté, un indice j est défini avec la valeur i ajoutée de 4, et un indice de boucle k est défini avec la valeur i ajoutée de 1 dans une opération 330. Ensuite, une boucle détermine s'il existe un évènement entre i et j qui est également un arrêt court. Pour cela, un test est fait dans une opération 340. Tant que ce test n'est pas positif, un test dans une opération 350 vérifie que k est inférieur à j, et k est incrémenté dans une opération 360.

Lorsqu'un arrêt court est trouvé, un test dans une opération 370 vérifie si les deux évènements E[i] et E[k] partagent la même cellule de localisation. Si c'est le cas, alors on a bien deux évènements avec un marqueur de déplacement de type arrêt court, et qui sont séparés par moins de quatre évènements. Alors, une fonction MStop() recevant i et k comme arguments transforme tous les marqueurs de déplacement E[n].l en arrêt court, avec n compris entre i et k.

Ensuite, ou lorsque l'opération 350 détermine qu'il n'y a pas d'évènement de type arrêt court à moins de 4 évènements de l'évènement i, ou lorsque les cellules de localisation de l'évènement i et celle de l'évènement k sont distinctes, un test dans une opération 390 vérifie s'il reste encore 4 opérations pour relancer une boucle. Si oui, alors dans une opération 395, l'indice i est mis à jour avec l'indice k et la boucle reprend avec l'opération 310. Sinon, la fonction se termine dans une opération 399.

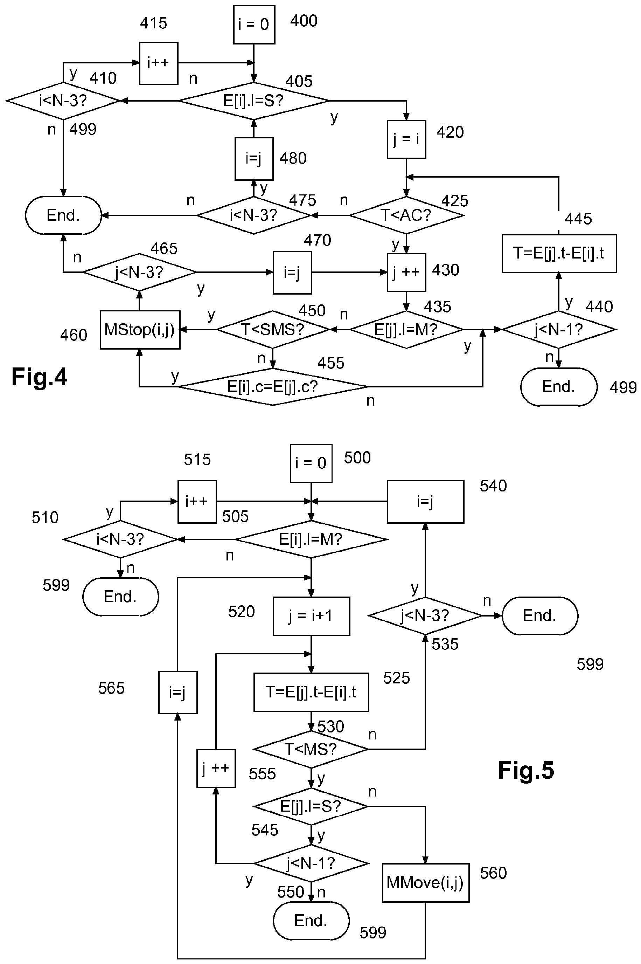

La figure 4 représente un autre exemple d'une fonction mise en oeuvre par l'analyseur 8. En effet, lorsque deux évènements dont les marqueurs de déplacement indiquent un arrêt court sont séparés par une durée, et que ces évènements sont séparés par une durée inférieure à un premier seuil permettant de passer d'une cellule à une autre, ou que les deux évènements sont associés à la même cellule de localisation mais que leurs marqueurs de temps sont séparés par une durée supérieure à un deuxième seuil indiquant que l'allerretour vers une cellule voisine n'était pas possible, alors tous les évènements entre ceux-ci sont modifiés de sorte que leur marqueur de déplacement indique un arrêt court.

Ainsi, dans une opération 400, un indice i de boucle est initialisé à 0. Ensuite, dans une opération 405, un test est réalisé pour déterminé si l'évènement d'indice i courant est associé à un arrêt court ou pas. Tant que ce test est négatif, dans une opération 410 teste s'il reste au moins trois évènements (puisque la fonction cherche au minimum un évènement entre deux évènements de type arrêt court), et, si c'est le cas, l'indice i est incrémenté dans une opération 415 et le test de l'opération 405 est répété. Si ce n'est pas le cas, la fonction se termine dans une opération 499.

Lorsqu'un évènement dont le marqueur de déplacement indique un arrêt court est trouvé, une boucle à deux tests est lancée afin d'essayer de vérifier si l'une des deux conditions ci-dessus est remplie. Pour cela, dans une opération 420, un indice j égal à i est défini.

Ensuite, une boucle commence dans laquelle deux conditions sont recherchées. Si l'une de ces deux conditions est remplie, alors les évènements situés entre les deux évènements les plus extrêmes temporellement sont modifiés pour les marquer comme correspondant à un arrêt court.

Ainsi, dans une opération 425, la condition d'arrêt la moins contraignante est testée, en comparant une durée T qui indique la différence entre le marqueur de temps de l'évènement d'indice j courant et celui de l'évènement d'indice i. Si la durée T est inférieure à ce premier seuil AC, alors l'indice j est incrémenté dans une opération 430. Puis, dans une opération 435, un test détermine si l'évènement d'indice j indique un mouvement ou un arrêt court. S'il s'agit d'un mouvement, alors dans une opération 440, un test détermine si l'évènement d'indice j est le dernier ou pas. Si c'est le cas, alors la fonction se termine avec l'opération 499. Sinon, une durée T correspondant à la différence entre le marqueur de temps de l'évènement d'indice i et l'évènement d'indice j est calculée dans une opération 445, puis la boucle reprend avec l'opération 425, jusqu'à ce qu'un évènement indiquant un arrêt court soit rencontré dans l'opération 435.

Lorsqu'un deuxième évènement indiquant un arrêt court est trouvé dans l'opération 435, un test dans une opération 450 détermine si la durée T est inférieure à un deuxième seuil SMS. Si c'est le cas, alors la deuxième condition (la plus contraignante) est remplie, et dans une opération 460, la fonction MStop() est appelée avec les indices i et j pour modifier les marqueurs de déplacement des évènements entre ces indices en arrêt court. Ensuite, un test est réalisé dans une opération 465 pour déterminer s'il reste encore 3 évènement dans la liste E[], comme pour l'opération 410..

Si ce n'est pas le cas, alors un test est réalisé dans une opération 455 pour déterminer si les évènements d'indices i et j concernent la même cellule de localisation. Si c'est le cas, alors la première condition est remplie, et dans une opération 460, la fonction MStop() est appelée avec les indices i et j pour modifier les marqueurs de déplacement des évènements entre ces indices en arrêt court, puis le test de l'opération 465 est réalisé.

Si le test de l'opération 455 est négatif, alors la boucle se poursuit avec l'opération 440 jusqu'à ce que la première condition soit remplie ou que la durée T excède le premier seuil AC, ou que l'opération 440 indique la fin de la boucle.

Enfin, lorsque le test de l'opération 465 est positif, alors l'indice i est mis à jour avec la valeur de l'indice j (puisque l'évènement d'indice j indique un arrêt court) dans une opération 470, et la boucle reprend avec l'opération 430.

Le premier seuil AC et le deuxième seuil SMS sont prévus de sorte que AC est supérieur à SMS. Le premier seuil AC permet de détecter les cas indiquant un changement de cellule puis un retour à la cellule originale, alors que le temps nécessaire pour cela (le temps correspondant au premier seuil AC), n'était pas suffisant. De manière similaire, le deuxième seuil SMS désigne un temps estimé nécessaire pour passer d'une cellule à une autre cellule voisine.

Dans l'exemple décrit ici, le premier seuil AC est d'environ 10 minutes, tandis que le deuxième seuil SMS est d'environ 6 minutes. Ainsi, la fonction va transformer en arrêt courts les évènements associés à un mouvement compris entre deux évènements associés à un arrêt court et séparés de moins de 6 (deuxième seuil SMS) ou 10 minutes (premier seuil AC).

La figure 5 représente un autre exemple d'une fonction mise en oeuvre par l'analyseur 8. En effet, lorsque deux évènements indiquent un mouvement, et que ces évènements sont séparés par une durée inférieure à un troisième seuil indiquant qu'un arrêt court n'est pas possible, alors les évènements intermédiaires sont modifiés de sorte que leurs marqueurs de déplacement indiquent un mouvement.

Ainsi, dans une opération 500, un indice i de boucle est initialisé à 0. Ensuite dans des opérations 505, 510 et 515 similaires aux opérations 405, 410 et 415, l'évènement d'indice i est testé et incrémenté jusqu'à trouver un évènement indiquant un mouvement. La seule différence est que l'opération 405 teste si l'évènement est de type arrêt court alors que l'opération 505 teste si l'évènement est de type mouvement.

Ensuite, une boucle est lancée afin de chercher l'événement d'indice j dont le marqueur de déplacement indique un mouvement et dont le marqueur de temps indique une durée inférieure au troisième seuil MS lorsque comparé au marqueur de temps de l'évènement d'indice i.

Ainsi, dans une opération 520, un indice j est défini comme égal à i plus 1, puis dans une opération 525 une durée T entre le marqueur de temps de l'évènement d'indice j et le marqueur de temps de l'évènement d'indice i est calculée.

Ensuite, dans une opération 530, la durée T est comparée au troisième seuil afin de déterminer si celui-ci est dépassé ou pas. Si c'est le cas, alors un test similaire à celui de l'opération 510 est réalisé dans une opération 535. Si c'est le cas, alors l'indice i est mis à jour avec l'indice j dans une opération 540, et le prochain évènement indiquant un mouvement est recherché avec l'opération 505. Si ce n'est pas le cas, alors la fonction se termine dans une opération 599.

Si la durée T est inférieure au troisième seuil, alors dans une opération 545, un test détermine si l'évènement d'indice j indique un arrêt court. Si c'est le cas, alors dans une opération 550, un test détermine s'il s'agit de la dernière opération de la liste E. Si c'est le cas, alors la fonction se termine avec l'opération 599. Sinon, alors l'indice j est incrémenté dans une opération 555 et la boucle reprend avec l'opération 525 jusqu'à trouver un deuxième évènement indiquant un mouvement, ou jusqu'à ce que le troisième seuil MS soit dépassé.

Lorsqu'un deuxième évènement indiquant un mouvement est trouvé dans l'opération 545, une fonction MMove() est exécutée dans une opération 560. La fonction MMove() reçoit comme arguments les indices i et j, pour modifier les marqueurs de déplacement des évènements entre ces indices en mouvement. Enfin, dans une opération 565, l'indice i est mis à jour avec j (puisque l'évènement d'indice j indique un mouvement), et la boucle reprend avec l'opération 520.

Dans l'exemple décrit ici, le troisième seuil MS est d'environ 15 minutes. Ainsi, tous les évènements associés à un arrêt court entre deux évènements associés à un mouvement et séparés de moins de 15 minutes. En variante, le seuil MS pourrait être plus important, et par exemple être d'une heure. Dit autrement, cette fonction revient à considérer qu'un arrêt court entre deux mouvements n'est pas une anomalie si elle dure plus longtemps que le troisième seuil MS.

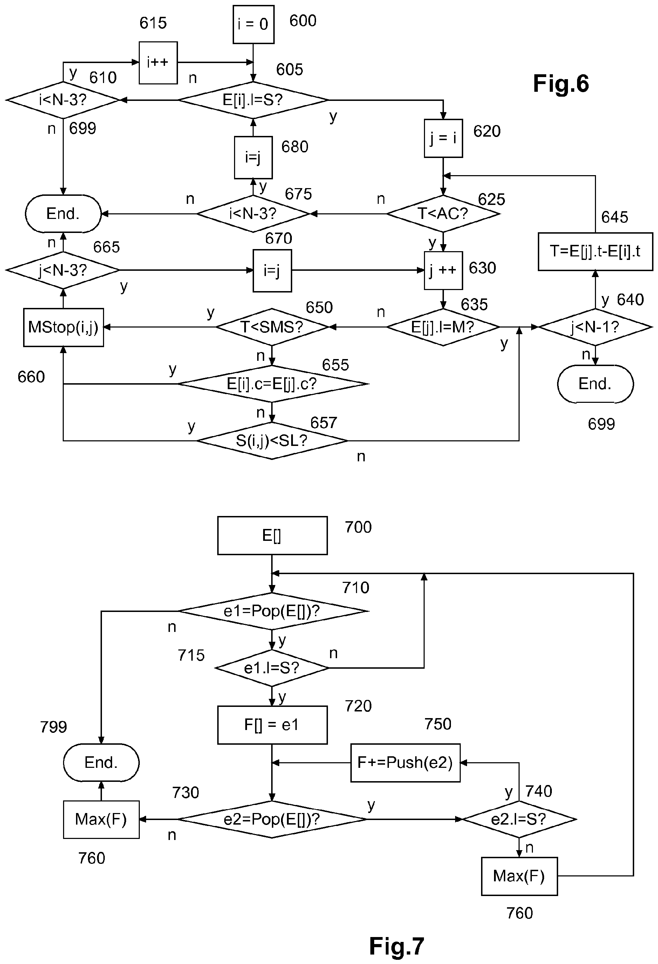

La figure 6 représente un autre exemple d'une fonction mise en oeuvre par l'analyseur 8. Cette fonction peut être vue comme une variante de la fonction représentée sur la figure 4, ou comme un complément à celle-ci, qui peut par exemple être exécutée après la fonction de la figure 5.

Dans cette fonction la structure est similaire, mais les conditions recherchées diffèrent :
- la première condition, la moins contraignante, diffère en ce que les cellules de localisation associées aux deux évènements ne sont pas identiques, le premier seuil étant lui aussi identique, et la vitesse de déplacement entre les deux arrêts courts extrême devant être inférieure à une vitesse seuil SL,
- la deuxième condition est similaire à la deuxième condition de la fonction de la figure 4, le deuxième seuil étant identique, mais les cellules de localisation doivent ici être identiques.

La fonction de la figure 6 étant très proche de celle de la figure 4, les références numériques ont été maintenues identiques, en adaptant la centaine. En fait, seules les opérations 650 et 655 diffèrent des opérations 450 et 455, une opération 657 étant ajoutée.

L'opération 650 teste la seconde condition, et la combinaison des opérations 655 et 657 teste la première condition. Dans la pratique, la première condition ne devrait pas être remplie, dans la mesure où elle correspond à la même première condition que pour la fonction de la figure 4. Mais elle permet de s'assurer que la fonction de la figure 5 ou toute autre fonction exécutée précédemment n'a pas introduit de cas non souhaité.

L'opération 657 teste si la vitesse « à vol d'oiseau » entre les cellules de localisation associées aux évènements d'indice i et j est inférieure à une vitesse seuil SL d'environ 10 km/h. Elle est calculée en divisant la distance entre les centres des cellules de localisation respectives par la durée entre les deux évènements. Ainsi, dans le cas où un événement de type bruit (par exemple si le dispositif de communication mobile s'attache à une station éloignée par accident) pourrait faire croire à un déplacement entre les évènements i et j, ce test permet de le corriger. L'opération 655 n'est également pas supposée se produire dans la pratique, mais, si cela devait être le cas, elle permet de ne pas avoir à calculer la vitesse dans l'opération 657 ce qui représente un gain de temps précieux.

Une fois que l'analyseur 8 a exécuté les fonctions des figures 3 à 6, il va simplifier les données résultantes pour produire les données de trajet. Pour cela, l'analyseur 8 va fusionner toutes les données de signalisations successives indiquant un arrêt court, et les associer, pour une durée totale correspondant à la différence entre les marqueurs de temps des évènements extrêmes, à la cellule de localisation la plus représentée.

La figure 7 représente un exemple de réalisation de cette fonction. Ainsi, dans une opération 700, la liste d'évènements E[] modifiée tel que précédemment est utilisée comme point de départ.

Ensuite, une boucle va dépiler cette liste et agréger les évènements indiquant un arrêt court lorsque nécessaire. Pour cela, dans une opération 710, la liste E[] est dépilée dans un évènement e1. Lorsque la liste est vide, la fonction se termine dans une opération 799. Dans une opération 715, un test détermine si l'évènement e1 indique un arrêt court. Lorsque ce n'est pas le cas, l'opération 710 est répétée.

Ensuite, dans une opération 720, une liste F[] est initialisée avec e1. La liste F[] va recevoir tous les évènements successifs indiquant un arrêt court. Dans une opération 730, la liste E[] est à nouveau dépilée, cette fois dans un évènement e2. S'il y a pas un évènement e2, alors dans une opération 740, un test détermine si l'évènement e2 concerne un arrêt court. Si c'est le cas, alors l'évènement e2 est introduit dans la liste F[] dans une opération 750, et l'opération 720 est répétée. Lorsque le prochain évènement e2 qui indique un mouvement est trouvé dans l'opération 740, ou lorsque l'opération 730 indique que la liste E[] se termine par une suite d'arrêts courts, une fonction Max() recevant la liste F[] comme argument est exécutée dans une opération 760. La fonction Max() a pour fonction la fusion des évènements de la liste F[], en choisissant la cellule de localisation la plus représentée en terme de durée dans la liste F[], et en résumant tous les évènements de cette liste en un seul évènement dont la durée correspond à la différence entre les marqueurs de temps les plus extrêmes de la liste F[], associée à la cellule de localisation choisie.

Ainsi, les données de trajet produites en sortie de l'analyseur 8 contiennent des suites d'évènements indiquant un mouvement et/ou un unique évènement indiquant un arrêt court.

Dans l'exemple décrit ici, l'analyseur exécute les fonctions des figures 3 à 7 séquentiellement, et de manière successive. Ainsi, l'analyseur exécute d'abord la fonction de la figure 3 sur l'ensemble des données, puis la fonction de la figure 4 sur les données résultantes, etc. Ces fonctions successives permettent de réduire le bruit naturel des données de signalisation et de réduire leur nombre, en produisant des données de trajectoire qui acquièrent un « sens » lié à la notion de déplacement autre qu'à pied.

Les suites d'évènements qui en résultent sont particulièrement avantageuses car elles présentent une certaine régularité qui permet de rassembler les trajets entre eux pour établir des statistiques et/ou rattacher une suite d'évènement à un parcours connu. De plus, elles permettent de réduire grandement le bruit qui est inhérent aux données de signalisation utilisées en entrée, ainsi que de réduire la quantité de calculs pour les comparer entre elles, en permettant de définir des épisodes signifiants.

Ainsi, les données de trajectoire qui sont produites représentent des segments qui représentent un déplacement tangible, même s'il ne correspond pas parfaitement aux données de signalisation originelles. Elles constituent une abstraction des données de signalisation qui permet, par leur nature qui désigne un mouvement ou un arrêt court de segmenter les données de signalisation originales en épisodes significatifs.

De plus, la notion d'arrêt court permet de déterminer concrètement une présence dans un lieu donné pour une plage de temps donnée, ce qui est presque impossible à partir des données de signalisation seules. Il devient en outre possible de comparer des trajectoires avec des trajectoires de référence.

Enfin, les données de trajectoire constituent une forme de compression des données de signalisation : cela rend possible des calculs sur de grands volumes de données de localisation. Par exemple, la Demanderesse a pu réduire un volume de données associées à un aéroport d'environ 4To à seulement 100Go. Cette réduction a permis de rendre le traitement des données de trajectoires possible, alors qu'il ne l'était pas avec la masse de données originelle, sauf à ajouter une quantité de serveurs importante.

Une fois que les données de trajectoire 10 ont été produites, celles-ci peuvent être traitées afin de classifier les déplacements qu'elles désignent.

Pour cela, l'extracteur 12 et le détecteur 14 vont traiter les données de trajectoire 10 pour sélectionner les données de signalisation de la mémoire 4 qui sont pertinentes, et en tirer des données de déplacement classifié lorsque cela est possible.

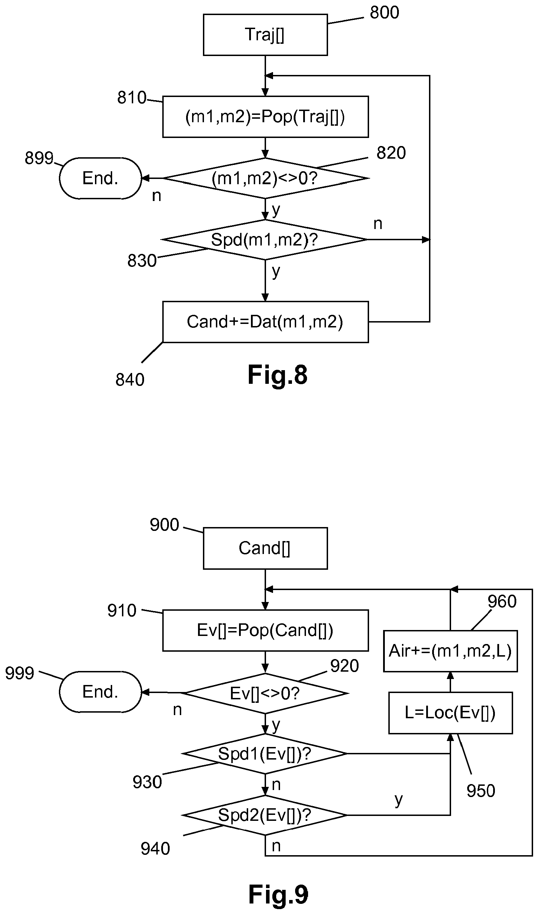

La figure 8 représente un exemple de mise en oeuvre d'une fonction par l'extracteur 12.

Dans une opération 800, la fonction part des données de trajectoire 10 qui ont été calculées. Ensuite, une boucle est lancée pour traiter les données de trajectoire paire par paire.

Ainsi, dans une opération 810, les données de trajectoire Traj[] sont dépilées au moyen d'une fonction Pop() qui retourne une paire de marqueurs de déplacement m1 et m2 qui sont associés à un même identifiant de dispositif de communication mobile et qui ont des marqueurs de temps respectifs successifs.

Dans une opération 820, il est vérifié que le couple (m1,m2) n'est pas vide. Si c'est le cas, alors toutes les données de trajectoire ont été traitées et la fonction se termine dans une opération 899.

Lorsque le couple n'est pas vide, l'extracteur 12 exécute une fonction Spd() dans une opération 830. La fonction Spd() détermine si la durée entre les marqueurs de temps excède une durée minimale (par exemple 30 minutes), et compare la distance entre les centres des cellules de localisation associées au marqueurs de temps à une distance seuil, par exemple 200 km.

Si la fonction Spd() retourne un résultat positif, alors le déplacement désigné par le couple (m1,m2) est un candidat qui doit être analysé par le détecteur 14. Pour cela, dans une opération 840, l'extracteur 12 exécute une fonction Dat(). La fonction Dat() reçoit comme arguments les marqueurs de déplacement m1 et m2, et sélectionne dans la mémoire 4 toutes les données de signalisation qui sont associées à l'identifiant de dispositif mobile de communication qui leur correspond et dont les marqueurs de temps sont compris entre les marqueurs de temps des marqueurs de déplacement m1 et m2. Le résultat est stocké sous forme de liste dans un ensemble candidat Cand[] qui reçoit tous les jeux de données extraits au gré des exécutions de la fonction Dat(). La liste stockée dans l'ensemble candidat Cand[] peut également recevoir les marqueurs de temps m1 et m2 concernés.

Une fois l'opération 840 terminée, ou lorsque la fonction Spd() retourne un résultat négatif, la boucle est répétée avec l'opération 810.

Une fois que tous les déplacements susceptibles d'être classifiés ont été déterminés et que les données de signalisation pertinentes ont été récupérées dans la mémoire 4, le détecteur 14 peut être appelé pour les analyser et déterminer ceux d'entre eux qui sont susceptibles de donner lieu à des données de déplacement classifié.

La figure 9 représente un exemple de mise en oeuvre d'une fonction par le détecteur 14 à cet effet.

Dans une opération 900, le détecteur 14 reçoit l'ensemble candidat déterminé par l'extracteur 12. Ensuite, une boucle est lancée pour traiter les données de trajectoire paire par paire.

Ainsi, dans une opération 910, l'ensemble candidat Cand[] est dépilée au moyen d'une fonction Pop() qui retourne une liste de données de signalisation Ev[] qui a été déterminée avec la fonction de la figure 8.

Dans une opération 920, il est vérifié que la liste Ev[] n'est pas vide. Si c'est le cas, alors l'ensemble candidat a été traité et la fonction se termine dans une opération 999.

Lorsque le couple n'est pas vide, l'extracteur 12 exécute deux fonctions Spd1() et Spd2() dans des opérations 940 et 950. Dans l'exemple décrit ici, l'opération 950 est réalisée si le résultat de l'opération 940 est négative. En variante, les opérations 940 et 950 pourraient être réalisées en une seule opération ou en parallèle.

La fonction Spd1() et la fonction Spd2() représentent deux conditions par lesquelles les données de signalisation de la liste Ev[] vont être testées pour déterminer si le déplacement peut être classifié avec des données de déplacement classifié 16.

La fonction Spd1() a pour rôle de tester les données de signalisation par couple de marqueurs de temps et de garder la vitesse maximale (c'est-à-dire la distance entre les centres des cellules de localisation de ces données de signalisation divisée par la durée entre leurs marqueurs de temps respectifs) sur l'ensemble des données de la liste Ev[], parmi les couples pour lesquels la durée entre les marqueurs de temps excède 10 minutes. Dans l'exemple décrit ici, ces couples sont formés en sélectionnant, pour chaque donnée de signalisation, la donnée de signalisation dont le marqueur de temps est le plus proche tout en étant éloigné de plus de 10 minutes. Cela permet d'éviter de prendre en compte des couples correspondant à un artefact, comme lorsqu'un dispositif mobile s'attache et se détache successivement à des antennes dans des cellules de localisation contiguës, mais sans qu'il y ait de véritable déplacement. D'autres méthodes pourraient être utilisées pour sélectionner des couples permettant d'écarter les artefacts. Une fois cette vitesse maximale déterminée, elle est comparée à une vitesse seuil, par exemple 350km/h, et la fonction Spd1() retourne une valeur positive si la vitesse maximale excède le seuil, et négative sinon. Cette vitesse très élevée indique clairement un voyage par un transport aérien, ce qui permettra de classifier le déplacement comme aérien.

La fonction Spd2() a pour rôle de tester les données de signalisation dans le cas, où la liste Ev[] contient une longue période sans évènement, avec des cellules de localisation très éloignées. C'est typiquement le cas lorsqu'un téléphone est éteint et/ou n'est plus enregistré auprès d'une antenne car il est à 10 000 pieds d'altitude. Ainsi, si un utilisateur a éteint son téléphone longtemps avant que l'avion ne décolle, ou qu'il ne le rallume pas rapidement à l'atterrissage, la fonction Spd2() permet de détecter quand même le déplacement. Dès lors, la vitesse apparente entre les deux données de signalisation successives pourra être inférieure au seuil de la fonction Spd1(), mais néanmoins être considérée comme désignant un déplacement aérien dès lors qu'elle est supérieure à 150km/h par exemple.

L'idée sous-jacente de la fonction Spd2() est que seuls les transports aériens ont pour conséquence une absence d'évènement pendant une durée longue, par exemple supérieure à deux heures, et avec une vitesse apparente importante. Si l'utilisateur était dans un train ou une voiture, il y aurait un évènement. Afin de compléter cette détermination, la fonction Spd2() peut de manière optionnelle analyser la cellule de localisation des données de signalisation légèrement avant le premier marqueur de temps et légèrement après le deuxième marqueur de temps afin de déterminer si une cellule de localisation correspond à un aéroport, ce qui finirait de confirmer qu'il s'agit d'un déplacement aérien.

S'il n'existe pas de données de signalisation successives séparées par une durée supérieure à par exemple deux heures et sans évènement réseau ou si la vitesse apparente n'est pas supérieure à une vitesse de par exemple 150km/h, alors la fonction Spd2() retourne une valeur négative. Dans le cas contraire, s'il existe des données de signalisation successives séparées par une durée supérieure à deux heures et sans évènement réseau et si la vitesse apparente est supérieure à par exemple 150km/h, la fonction Spd2() retourne une valeur positive.

Lorsque la fonction Spd1() ou la fonction Spd2() retourne une valeur positive, alors une fonction Loc() est exécutée dans une opération 950. La fonction Loc() part des données de signalisations ayant donné la vitesse supérieure à par exemple 350km/h dans le cas de la fonction Spd1() et des données de signalisation successives séparées par une durée supérieure à deux heures et sans évènement réseau dans le cas de la fonction Spd2() et remonte de part et d'autre de celles-ci par marqueurs de temps croissants et décroissants jusqu'à trouver une cellule de localisation dans les données de signalisation qui correspond à une zone aéroportuaire. En variante, si aucune cellule de localisation ne correspond à une zone aéroportuaire, l'aéroport le plus proche des cellules de localisation dans les données de signalisation est retenu. Les deux aéroports ainsi déterminés sont stockés dans une variable L. D'autres données pourraient être stockées dans la variable L, comme les heures de vol déterminé, la durée correspondante ou la vitesse maximale détectée sur ce trajet.

Ensuite, dans une opération 960, une fonction Air() crée les données de déplacement classifié en associant les marqueurs de temps m1 et m2 à l'origine de la liste Ev[] et les aéroports de la variable L. En option, l'identifiant de dispositif de communication mobile peut être attaché, ainsi qu'une valeur indiquant qu'il s'agit d'un transport aérien.

Après cela, ou lorsque les opérations 940 et 950 retournent toutes deux une valeur négative, la boucle est répétée avec l'opération 910.

Ce type d'information est particulièrement utile pour classifier les flux de transport et de personnes. Compte tenu de la croissance du trafic de biens et de personnes, ces informations, indisponibles par ailleurs présentent un intérêt technique considérable pour le dimensionnement des infrastructures publiques ainsi que la maîtrise des informations commerciales associées à ces flux.

Une fois les données de déplacement classifié déterminées, la fonction de la Figure 9 peut être répétée de manière récursive sur chaque trajet aérien identifié pour gérer les cas où un trajet comprenait une escale. En effet, dans le cas d'un trajet Brest-Toulouse comportant une escale à Paris, celle-ci est potentiellement mal gérée ou ignorée.

Pour pallier ce problème, entre deux marqueurs de temps m1 et m2 associés à un déplacement classifié comme aérien, des marqueurs de temps n1 et n2 associés aux aéroports de la variable L sont déterminés, et l'opération de la Figure 9 est répétée entre les marqueurs de temps m1 et n1 et n2 et m2. Si un déplacement aérien est découvert dans ces segments, l'opération est encore répétée, jusqu'à ce qu'aucun déplacement aérien supplémentaire ne soit détecté.

De plus, afin de déterminer une cellule de localisation dans les données de signalisation qui correspond à une zone aéroportuaire, le détecteur 14 peut être agencé pour déterminer, pour chaque évènement, la vitesse entre cet évènement et un évènement ayant lieu 15 minutes avant ou après, afin de déterminer si la vitesse de déplacement correspondante est inférieure à un seuil bas, par exemple de l'ordre de 50 km/h. Si c'est le cas, alors une zone aéroportuaire est recherchée dans un rayon faible de l'ordre de 50 km autour de la cellule de localisation associée à cet évènement.

## Revendications

1. Dispositif de détermination de trajectoire, comprenant :
- une mémoire (4) pour recevoir des données de signalisation associant des identifiants de dispositif mobile de communication, des marqueurs de temps et des identifiants de signalisation, certains au moins des identifiants de signalisation désignant une cellule de localisation,
- un classificateur (6) capable, pour un identifiant de dispositif mobile de communication donné, de marquer les données de signalisation qui lui sont associées avec un marqueur de déplacement indiquant un état choisi parmi une liste comprenant au moins un mouvement et un arrêt court,
- un analyseur (8) capable de traiter les données de signalisation marquées en fonction des marqueurs de déplacement afin de produire des données de trajectoire associant d'une part un identifiant de dispositif mobile de communication donné et d'autre part une suite de marqueurs de déplacement associés chacun à une cellule de localisation et à un marqueur de temps, de sorte que deux marqueurs de déplacement dont les marqueurs de temps indiquent qu'ils se succèdent indiquent deux mouvements ou indiquent au plus un unique arrêt court, en appliquant l'une au moins des règles suivantes :
a) la modification de marqueurs de déplacement quelconques en marqueurs de déplacement indiquant un arrêt court, lorsque, pour deux marqueurs de déplacement indiquant un arrêt court associé à une unique cellule de localisation, le nombre de marqueurs de déplacements dont les marqueurs de temps indiquent qu'ils sont entre ces deux marqueurs de déplacement est inférieur ou égal à 4,
b) la modification de marqueurs de déplacement indiquant un mouvement en marqueurs de déplacement indiquant un arrêt court lorsque les marqueurs de temps qui leur sont associés indiquent qu'ils sont précédés et suivis par des marqueurs de déplacement indiquant un arrêt court et que les marqueurs de temps associés à ces derniers indiquent une durée inférieure à un premier seuil,
c) la modification de marqueurs de déplacement indiquant un mouvement en marqueurs de déplacement indiquant un arrêt court lorsque les marqueurs de temps qui leur sont associés indiquent qu'ils sont précédés et suivis par des marqueurs de déplacement indiquant un arrêt court qui sont associés à une même cellule de localisation et que les marqueurs de temps associés à ces derniers indiquent une durée inférieure à un deuxième seuil,
d) la modification de marqueurs de déplacement indiquant un arrêt court en marqueurs de déplacement indiquant un mouvement lorsque les marqueurs de temps qui leur sont associés indiquent qu'ils sont précédés et suivis par des marqueurs de déplacement indiquant un mouvement et que les marqueurs de temps associés à ces derniers indiquent une durée inférieure à un troisième seuil,
l'analyseur (8) étant en outre agencé pour appliquer, après l'application d'au moins l'une des règles a), b), c) et d), la règle suivante:
e) la fusion de marqueurs de déplacement indiquant un arrêt court dont les marqueurs de temps indiquent qu'ils sont consécutifs, et l'association au marqueur de déplacement résultant de la cellule de localisation associée aux marqueurs de déplacement dont les marqueurs de temps représentent la durée la plus importante et d'un marqueur de temps correspondant à la somme des durées des marqueurs de temps associés, **caractérisé en ce qu'**il comprend en outre :
- un extracteur (12) agencé pour déterminer parmi les données de trajectoires des couples de marqueurs de déplacement associés à un même identifiant de dispositif mobile de communication dont les marqueurs de temps et les cellules de localisation associés définissent une durée excédant un premier seuil et une distance excédant un deuxième seuil, et, pour un couple de marqueurs de déplacement donné, pour regrouper en un ensemble candidat les données de signalisation associées à l'identifiant de dispositif mobile de communication correspondant et dont les marqueurs de temps sont compris entre les deux marqueurs de temps du couple de marqueurs de déplacement donné,
- un détecteur (14) agencé pour déterminer dans un ensemble candidat donné si des données de signalisation associées à des marqueurs de temps remplissent l'une des conditions suivantes :
I) les données de signalisation définissent une vitesse de déplacement supérieure à un troisième seuil, et les marqueurs de temps correspondants sont séparés par une durée supérieure à un quatrième seuil,
II) les marqueurs de temps des données de signalisation sont séparés par une durée supérieure à un cinquième seuil supérieur au quatrième seuil, les identifiants de signalisation associés indiquent une absence d'activité, les données de signalisation définissent une vitesse de déplacement supérieure à la vitesse définie par la division du premier seuil par le deuxième seuil,
le détecteur (14) étant agencé, lorsque l'une des conditions I) et II) est remplie, pour retourner des données de déplacement classifié (16) associant des données de type de déplacement et des données de départ et d'arrivée déterminées à partir des cellules de localisation associées aux données de signalisation et d'un groupe d'emplacements choisis,
et **en ce que** le premier seuil de l'extracteur (12) est 30 minutes, le deuxième seuil de l'extracteur (12) est 200km, le troisième seuil du détecteur (14) est 350 km/h, le quatrième seuil du détecteur (14) est 10 minutes, le cinquième seuil du détecteur (14) est 2h, de sorte que les données de déplacement classifié (16) définissent des trajets identifiés entre des lieux de départ et des lieux d'arrivée ainsi que des moyens de déplacement.

2. Dispositif selon la revendication 1, dans lequel le détecteur (14) est agencé, lorsque la condition II) est remplie, pour vérifier que les cellules de localisation associées ou celles de données de signalisation dont les marqueurs de temps sont proches dans le temps désignent un emplacement appartenant à un groupe d'emplacements choisis avant de retourner des données de déplacement classifié (16).

3. Dispositif selon l'une des revendications précédentes, dans lequel le classificateur (6) et l'analyseur (8) sont agencés pour être appelés séquentiellement pour produire des données de trajectoire.

4. Dispositif selon l'une des revendications précédentes, dans lequel l'analyseur (8) est agencé pour appliquer la règle a) avant d'appliquer la règle b) et/ou la règle b) avant d'appliquer la règle c), et/ou la règle c) avant d'appliquer la règle d).

5. Dispositif selon l'une des revendications précédentes, dans lequel le détecteur (14) est agencé pour déterminer si l'une des conditions I) et II) s'applique à des données de signalisation situées entre des marqueurs de temps associés à des données de déplacement classifié, et pour répéter cette détermination sur les données de déplacement classifié résultantes, jusqu'à ce qu'aucune des conditions I) et II) ne soit remplie.

6. Procédé de détermination de trajectoire comprenant les opérations suivantes :
a) recevoir des données de signalisation associant des identifiants de dispositif mobile de communication, des marqueurs de temps et des identifiants de signalisation, certains au moins des identifiants de signalisation désignant une cellule de localisation,
b) pour un identifiant de dispositif mobile de communication donné, de marquer les données de signalisation qui lui sont associées avec un marqueur de déplacement indiquant un état choisi parmi une liste comprenant au moins un mouvement et un arrêt court,
c) traiter les données de signalisation marquées en fonction des marqueurs de déplacement afin de produire des données de trajectoire associant d'une part un identifiant de dispositif mobile de communication donné et d'autre part une suite de marqueurs de déplacement associés chacun à une cellule de localisation et à un marqueur de temps, de sorte que deux marqueurs de déplacement dont les marqueurs de temps indiquent qu'ils se succèdent indiquent deux mouvements ou indiquent au plus un unique arrêt court, en appliquant l'une au moins des règles suivantes :
c1) la modification de marqueurs de déplacement quelconques en marqueurs de déplacement indiquant un arrêt court, lorsque, pour deux marqueurs de déplacement indiquant un arrêt court associé à une unique cellule de localisation, le nombre de marqueurs de déplacements dont les marqueurs de temps indiquent qu'ils sont entre ces deux marqueurs de déplacement est inférieur ou égal à 4,
c2) la modification de marqueurs de déplacement indiquant un mouvement en marqueurs de déplacement indiquant un arrêt court lorsque les marqueurs de temps qui leur sont associés indiquent qu'ils sont précédés et suivis par des marqueurs de déplacement indiquant un arrêt court et que les marqueurs de temps associés à ces derniers indiquent une durée inférieure à un premier seuil,
c3) la modification de marqueurs de déplacement indiquant un mouvement en marqueurs de déplacement indiquant un arrêt court lorsque les marqueurs de temps qui leur sont associés indiquent qu'ils sont précédés et suivis par des marqueurs de déplacement indiquant un arrêt court qui sont associés à une même cellule de localisation et que les marqueurs de temps associés à ces derniers indiquent une durée inférieure à un deuxième seuil,
c4) la modification de marqueurs de déplacement indiquant un arrêt court en marqueurs de déplacement indiquant un mouvement lorsque les marqueurs de temps qui leur sont associés indiquent qu'ils sont précédés et suivis par des marqueurs de déplacement indiquant un mouvement et que les marqueurs de temps associés à ces derniers indiquent une durée inférieure à un troisième seuil,
et,
après l'application d'au moins une des règles c1) à c4), en appliquant la règle suivante:
c5) la fusion de marqueurs de déplacement indiquant un arrêt court dont les marqueurs de temps indiquent qu'ils sont consécutifs, et l'association au marqueur de déplacement résultant de la cellule de localisation associée aux marque de déplacement dont les marqueurs de temps représentent la durée la plus importante et d'un marqueur de temps correspondant à la somme des durées des marqueurs de temps associés,
d) déterminer parmi les données de trajectoires des couples de marqueurs de déplacement associés à un même identifiant de dispositif mobile de communication dont les marqueurs de temps et les cellules de localisation associés définissent une durée excédant un premier seuil et une distance excédant un deuxième seuil, et, pour un couple de marqueurs de déplacement donné, pour regrouper en un ensemble candidat les données de signalisation associées à l'identifiant de dispositif mobile de communication correspondant et dont les marqueurs de temps sont compris entre les deux marqueurs de temps du couple de marqueurs de déplacement donné,
e) déterminer dans un ensemble candidat donné si des données de signalisation associées à des marqueurs de temps remplissent l'une des conditions suivantes :
I) les données de signalisation définissent une vitesse de déplacement supérieure à un troisième seuil, et les marqueurs de temps correspondants sont séparés par une durée supérieure à un quatrième seuil,
II) les marqueurs de temps des données de signalisation sont séparés par une durée supérieure à un cinquième seuil supérieur au quatrième seuil, les identifiants de signalisation associés indiquent une absence d'activité, les données de signalisation définissent une vitesse de déplacement supérieure à la vitesse définie par la division du premier seuil par le deuxième seuil,
f) lorsque l'une des conditions I) et II) est remplie, retourner des données de déplacement classifié (16) associant des données de type de déplacement et des données de départ et d'arrivée déterminées à partir des cellules de localisation associées aux données de signalisation et d'un groupe d'emplacements choisis, dans lequel le premier seuil de l'extracteur (12) est 30 minutes, le deuxième seuil de l'extracteur (12) est 200km, le troisième seuil du détecteur (14) est 350 km/h, le quatrième seuil du détecteur (14) est 10 minutes, le cinquième seuil du détecteur (14) est 2h, de sorte que les données de déplacement classifié (16) définissent des trajets identifiés entre des lieux de départ et des lieux d'arrivée ainsi que des moyens de déplacement.

7. Procédé selon la revendication 6, dans lequel la condition II) comprend en outre de vérifier que les cellules de localisation associées ou celles de données de signalisation dont les marqueurs de temps sont proches dans le temps désignent un emplacement appartenant à un groupe d'emplacements choisis avant de retourner des données de déplacement classifié (16).

8. Procédé selon l'une des revendications 6 ou 7, dans lequel l'opération c) applique la règle c1) avant la règle c2), et/ou la règle c2) avant d'appliquer la règle c3), et/ou la règle c3) avant d'appliquer la règle c4).

9. Procédé selon l'une des revendications 6 à 8, dans lequel les opérations c), d), e) et f) sont réalisées dans cet ordre.

10. Procédé selon l'une des revendications 6 à 9, dans lequel l'opération e) est répétée sur des données de signalisations situées entre des marqueurs de temps associés à des données de déplacement classifié, ainsi que sur les données de déplacement classifié résultantes, jusqu'à ce qu'aucune des conditions I) et II) ne soit remplie.

11. Produit de programme d'ordinateur comprenant des portions de code programme pour mettre en oeuvre le procédé selon l'une des revendications 6 à 10 lorsque ledit programme est exécuté sur un ordinateur.

## Patentansprüche

1. Trajektorienbestimmungsvorrichtung, umfassend:
- einen Speicher (4) zum Empfangen von Signalisierungsdaten, die Mobilkommunikationsvorrichtungskennungen, Zeitmarker und Signalisierungskennungen verknüpfen, wobei mindestens einige der Signalisierungskennungen eine Lokalisierungszelle bezeichnen,
- einen Klassifizierer (6), der in der Lage ist, für eine gegebene Mobilkommunikationsvorrichtungskennung die mit ihr verknüpften Signalisierungsdaten mit einem Fortbewegungsmarker zu markieren, der einen Zustand anzeigt, ausgewählt aus einer Liste, die mindestens eine Bewegung und einen kurzen Stopp umfasst,
- einen Analysator (8), der in der Lage ist, die markierten Signalisierungsdaten in Abhängigkeit von den Fortbewegungsmarkern zu verarbeiten, um Trajektoriendaten zu erzeugen, die zum einen eine gegebene Mobilkommunikationsvorrichtungskennung und zum anderen eine Reihe von Fortbewegungsmarkern verknüpfen, welche jeweils mit einer Lokalisierungszelle und einem Zeitmarker verknüpft sind, sodass zwei Fortbewegungsmarker, deren Zeitmarker anzeigen, dass sie aufeinander folgen, zwei Bewegungen anzeigen oder höchstens einen einzigen kurzen Stopp anzeigen, durch Anwenden mindestens einer der folgenden Regeln:
a) Ändern von beliebigen Fortbewegungsmarkern zu Fortbewegungsmarkern, die einen kurzen Stopp anzeigen, wenn bei zwei Fortbewegungsmarkern, die einen kurzen Stopp anzeigen, der mit einer einzigen Lokalisierungszelle verknüpft ist, die Anzahl von Fortbewegungsmarkern, deren Zeitmarker anzeigen, dass sie zwischen diesen zwei Fortbewegungsmarkern liegen, kleiner oder gleich 4 ist,
b) Ändern von Fortbewegungsmarkern, die eine Bewegung anzeigen, zu Fortbewegungsmarkern, die einen kurzen Stopp anzeigen, wenn die mit ihnen verknüpften Zeitmarker anzeigen, dass ihnen Fortbewegungsmarker vorausgehen und folgen, die einen kurzen Stopp anzeigen, und die mit letzteren verknüpften Zeitmarker eine Dauer anzeigen, die kleiner als eine erste Schwelle ist,
c) Ändern von Fortbewegungsmarkern, die eine Bewegung anzeigen, zu Fortbewegungsmarkern, die einen kurzen Stopp anzeigen, wenn die mit ihnen verknüpften Zeitmarker anzeigen, dass ihnen Fortbewegungsmarker vorausgehen und folgen, die einen kurzen Stopp anzeigen, die mit derselben Lokalisierungszelle verknüpft sind, und die mit letzteren verknüpften Zeitmarker eine Dauer anzeigen, die kleiner als eine zweite Schwelle ist,
d) Ändern von Fortbewegungsmarkern, die einen kurzen Stopp anzeigen, zu Fortbewegungsmarkern, die eine Bewegung anzeigen, wenn die mit ihnen verknüpften Zeitmarker anzeigen, dass ihnen Fortbewegungsmarker vorausgehen und folgen, die eine Bewegung anzeigen, und die mit letzteren verknüpften Zeitmarker eine Dauer anzeigen, die kleiner als eine dritte Schwelle ist,
wobei der Analysator (8) weiter so eingerichtet ist, dass er nach dem Anwenden mindestens einer der Regeln a), b), c) und d) die folgende Regel anwendet:
e) Verschmelzen von Fortbewegungsmarkern, die einen kurzen Stopp anzeigen, deren Zeitmarker anzeigen, dass sie aufeinander folgen, und Verknüpfen der Lokalisierungszelle, die mit den Fortbewegungsmarkern verknüpft ist, deren Zeitmarker die größte Dauer darstellen, und eines Zeitmarkers, der der Summe der Dauern der verknüpften Zeitmarker entspricht, mit dem resultierenden Fortbewegungsmarker, **dadurch gekennzeichnet, dass** sie weiter umfasst:
- einen Extraktor (12), der so eingerichtet ist, dass er unter den Trajektoriendaten Fortbewegungsmarker-Paare bestimmt, die mit derselben Mobilkommunikationsvorrichtungskennung verknüpft sind, deren Zeitmarker und verknüpfte Lokalisierungszellen eine Dauer, die eine erste Schwelle überschreitet, und eine Entfernung, die eine zweite Schwelle überschreitet, definieren, und für ein gegebenes Fortbewegungsmarker-Paar die Signalisierungsdaten, die mit der entsprechenden Mobilkommunikationsvorrichtungskennung verknüpft sind und deren Zeitmarker zwischen den zwei Zeitmarkern des gegebenen Fortbewegungsmarker-Paares liegen, zu einer Kandidatenmenge zusammenfasst,
- einen Detektor (14), der so eingerichtet ist, dass er in einer gegebenen Kandidatenmenge bestimmt, ob Signalisierungsdaten, die mit Zeitmarkern verknüpft sind, eine der folgenden Bedingungen erfüllen:
I) die Signalisierungsdaten definieren eine Fortbewegungsgeschwindigkeit, die größer als eine dritte Schwelle ist, und die entsprechenden Zeitmarker sind durch eine Dauer getrennt, die größer als eine vierte Schwelle ist,
II) die Zeitmarker der Signalisierungsdaten sind durch eine Dauer getrennt, die größer als eine fünfte Schwelle ist, die größer als die vierte Schwelle ist, die verknüpften Signalisierungskennungen zeigen das Fehlen einer Aktivität an, die Signalisierungsdaten definieren eine Fortbewegungsgeschwindigkeit, die größer als die durch die Division der ersten Schwelle durch die zweite Schwelle definierte Geschwindigkeit ist,
wobei der Detektor (14) so eingerichtet ist, dass er, wenn eine der Bedingungen I) und II) erfüllt ist, klassifizierte Fortbewegungsdaten (16) zurückgibt, die Fortbewegungstypdaten und Start- und Ankunftsdaten verknüpfen, die von mit den Signalisierungsdaten verknüpften Lokalisierungszellen und einer Gruppe ausgewählter Orte aus bestimmt werden,
und dadurch, dass die erste Schwelle des Extraktors (12) 30 Minuten beträgt, die zweite Schwelle des Extraktors (12) 200 km beträgt, die dritte Schwelle des Detektors (14) 350 km/h beträgt, die vierte Schwelle des Detektors (14) 10 Minuten beträgt, die fünfte Schwelle des Detektors (14) 2 h beträgt, sodass die klassifizierten Fortbewegungsdaten (16) identifizierte Strecken zwischen Startorten und Ankunftsorten sowie Fortbewegungsmittel definieren.

2. Vorrichtung nach Anspruch 1, wobei der Detektor (14) so eingerichtet ist, dass er, wenn die Bedingung II) erfüllt ist, überprüft, dass die verknüpften Lokalisierungszellen oder die von Signalisierungsdaten, deren Zeitmarker zeitlich nahe beieinander liegen, eine Stelle bezeichnen, die zu einer Gruppe ausgewählter Stellen gehört, bevor er klassifizierte Fortbewegungsdaten (16) zurückgibt.

3. Vorrichtung nach einem der vorstehenden Ansprüche, wobei der Klassifizierer (6) und der Analysator (8) so eingerichtet sind, dass sie sequentiell aufgerufen werden, um Trajektoriendaten zu erzeugen.

4. Vorrichtung nach einem der vorstehenden Ansprüche, wobei der Analysator (8) so eingerichtet ist, dass er die Regel a) anwendet, bevor er die Regel b) anwendet, und/oder die Regel b), bevor er die Regel c) anwendet, und/oder die Regel c), bevor er die Regel d) anwendet.

5. Vorrichtung nach einem der vorstehenden Ansprüche, wobei der Detektor (14) so eingerichtet ist, dass er bestimmt, ob eine der Bedingungen I) und II) auf Signalisierungsdaten zutrifft, die zwischen Zeitmarkern liegen, die mit klassifizierten Fortbewegungsdaten verknüpft sind, und dass et diese Bestimmung an den resultierenden klassifizierten Fortbewegungsdaten wiederholt, bis keine der Bedingungen I) und II) erfüllt ist.

6. Verfahren zur Trajektorienbestimmung, das die folgenden Operationen umfasst:
a) Empfangen der Signalisierungsdaten, die Mobilkommunikationsvorrichtungskennungen, Zeitmarker und Signalisierungskennungen verknüpfen, wobei mindestens einige der Signalisierungskennungen eine Lokalisierungszelle bezeichnen,
b) für eine gegebene Mobilkommunikationsvorrichtungskennung, Markieren der mit ihr verknüpften Signalisierungsdaten mit einem Fortbewegungsmarker, der einen Zustand anzeigt, ausgewählt aus einer Liste, die mindestens eine Bewegung und einen kurzen Stopp umfasst,
c) Verarbeiten der markierten Signalisierungsdaten in Abhängigkeit von den Fortbewegungsmarkern, um Trajektoriendaten zu erzeugen, die zum einen eine gegebene Mobilkommunikationsvorrichtungskennung und zum anderen eine Reihe von Fortbewegungsmarkern verknüpfen, welche jeweils mit einer Lokalisierungszelle und einem Zeitmarker verknüpft sind, sodass zwei Fortbewegungsmarker, deren Zeitmarker anzeigen, dass sie aufeinander folgen, zwei Bewegungen anzeigen oder höchstens einen einzigen kurzen Stopp anzeigen, durch Anwenden mindestens einer der folgenden Regeln:
c1) Ändern von beliebigen Fortbewegungsmarkern zu Fortbewegungsmarkern, die einen kurzen Stopp anzeigen, wenn bei zwei Fortbewegungsmarkern, die einen kurzen Stopp anzeigen, der mit einer einzigen Lokalisierungszelle verknüpft ist, die Anzahl von Fortbewegungsmarkern, deren Zeitmarker anzeigen, dass sie zwischen diesen zwei Fortbewegungsmarkern liegen, kleiner oder gleich 4 ist,
c2) Ändern von Fortbewegungsmarkern, die eine Bewegung anzeigen, zu Fortbewegungsmarkern, die einen kurzen Stopp anzeigen, wenn die mit ihnen verknüpften Zeitmarker anzeigen, dass ihnen Fortbewegungsmarker vorausgehen und folgen, die einen kurzen Stopp anzeigen, und die mit letzteren verknüpften Zeitmarker eine Dauer anzeigen, die kleiner als eine erste Schwelle ist,
c3) Ändern von Fortbewegungsmarkern, die eine Bewegung anzeigen, zu Fortbewegungsmarkern, die einen kurzen Stopp anzeigen, wenn die mit ihnen verknüpften Zeitmarker anzeigen, dass ihnen Fortbewegungsmarker vorausgehen und folgen, die einen kurzen Stopp anzeigen, die mit derselben Lokalisierungszelle verknüpft sind, und die mit letzteren verknüpften Zeitmarker eine Dauer anzeigen, die kleiner als eine zweite Schwelle ist,
c4) Ändern von Fortbewegungsmarkern, die einen kurzen Stopp anzeigen, zu Fortbewegungsmarkern, die eine Bewegung anzeigen, wenn die mit ihnen verknüpften Zeitmarker anzeigen, dass ihnen Fortbewegungsmarker vorausgehen und folgen, die eine Bewegung anzeigen, und die mit letzteren verknüpften Zeitmarker eine Dauer anzeigen, die kleiner als eine dritte Schwelle ist,
und
nach dem Anwenden mindestens einer der Regeln c1) bis c4) durch Anwenden der folgenden Regel:
c5) Verschmelzen von Fortbewegungsmarkern, die einen kurzen Stopp anzeigen, deren Zeitmarker anzeigen, dass sie aufeinander folgen, und Verknüpfen der Lokalisierungszelle, die mit den Fortbewegungsmarkern verknüpft ist, deren Zeitmarker die größte Dauer darstellen, und eines Zeitmarkers, der der Summe der Dauern der verknüpften Zeitmarker entspricht, mit dem resultierenden Fortbewegungsmarker,
d) Bestimmen, unter den Trajektoriendaten, von Fortbewegungsmarker-Paaren, die mit derselben Mobilkommunikationsvorrichtungskennung verknüpft sind, deren Zeitmarker und verknüpfte Lokalisierungszellen eine Dauer, die eine erste Schwelle überschreitet, und eine Entfernung, die eine zweite Schwelle überschreitet, definieren, und, für ein gegebenes Fortbewegungsmarker-Paar, Zusammenfassen der Signalisierungsdaten, die mit der entsprechenden Mobilkommunikationsvorrichtungskennung verknüpft sind und deren Zeitmarker zwischen den zwei Zeitmarkern des gegebenen Fortbewegungsmarker-Paares liegen, zu einer Kandidatenmenge,
e) Bestimmen, in einer gegebenen Kandidatenmenge, ob Signalisierungsdaten, die mit Zeitmarkern verknüpft sind, eine der folgenden Bedingungen erfüllen:
I) die Signalisierungsdaten definieren eine Fortbewegungsgeschwindigkeit, die größer als eine dritte Schwelle ist, und die entsprechenden Zeitmarker sind durch eine Dauer getrennt, die größer als eine vierte Schwelle ist,
II) die Zeitmarker der Signalisierungsdaten sind durch eine Dauer getrennt, die größer als eine fünfte Schwelle ist, die größer als die vierte Schwelle ist, die verknüpften Signalisierungskennungen zeigen das Fehlen einer Aktivität an, die Signalisierungsdaten definieren eine Fortbewegungsgeschwindigkeit, die größer als die durch die Division der ersten Schwelle durch die zweite Schwelle definierte Geschwindigkeit ist,
f) wenn eine der Bedingungen I) und II) erfüllt ist, Zurückgeben von klassifizierten Fortbewegungsdaten (16), die Fortbewegungstypdaten und Start- und Ankunftsdaten verknüpfen, die von den mit den Signalisierungsdaten verknüpften Lokalisierungszellen und einer Gruppe ausgewählter Orte aus bestimmt werden,
wobei die erste Schwelle des Extraktors (12) 30 Minuten beträgt, die zweite Schwelle des Extraktors (12) 200 km beträgt, die dritte Schwelle des Detektors (14) 350 km/h beträgt, die vierte Schwelle des Detektors (14) 10 Minuten beträgt, die fünfte Schwelle des Detektors (14) 2 h beträgt, sodass die klassifizierten Fortbewegungsdaten (16) identifizierte Strecken zwischen Startorten und Ankunftsorten sowie Fortbewegungsmittel definieren.

7. Verfahren nach Anspruch 6, wobei die Bedingung II) weiter das Überprüfen umfasst, dass die verknüpften Lokalisierungszellen oder die von Signalisierungsdaten, deren Zeitmarker zeitlich nahe beieinander liegen, eine Stelle bezeichnen, die zu einer Gruppe ausgewählter Stellen gehört, bevor klassifizierte Fortbewegungsdaten (16) zurückgegeben werden.

8. Verfahren nach einem der Ansprüche 6 oder 7, wobei die Operation c) die Regel c1) vor der Regel c2) anwendet, und/oder die Regel c2), bevor sie die Regel c3) anwendet, und/oder die Regel c3), bevor sie die Regel c4) anwendet.

9. Verfahren nach einem der Ansprüche 6 bis 8, wobei die Operationen c), d), e) und f) in dieser Reihenfolge ausgeführt werden.

10. Verfahren nach einem der Ansprüche 6 bis 9, wobei die Operation e) an Signalisierungsdaten, die zwischen Zeitmarkern liegen, die mit klassifizierten Fortbewegungsdaten verknüpft sind, sowie an den resultierenden klassifizierten Fortbewegungsdaten wiederholt wird, bis keine der Bedingungen I) und II) erfüllt ist.

11. Computerprogrammprodukt, das Programmcodeabschnitte umfasst, um das Verfahren nach einem der Ansprüche 6 bis 10 zu implementieren, wenn das Programm auf einem Computer ausgeführt wird.

## Claims

1. A trajectory determining device, comprising:
- a memory (4) for receiving signaling data associating communications mobile device identifiers, time markers and signaling identifiers, at least some of the signaling identifiers designating a localization cell,
- a classifier (6) capable, for a given communications mobile device identifier, of marking the signaling data associated with it with a movement marker indicating a state chosen from amongst a list comprising at least one movement and one short stop,
- an analyzer (8) capable of processing the signaling data marked according to the movement markers in order to produce trajectory data associating, on the one hand, a given communications mobile device identifier and, on the other, a series of movement markers each associated with a localization cell and with a time marker, such that two movement markers whose time markers indicate that they are consecutive indicate two movements or indicate at most one short stop, by applying at least one of the following rules:
a) the modification of any given movement markers into movement markers indicating a short stop, when, for two movement markers indicating a short stop associated with a single localization cell, the number of movement markers whose time markers indicate that they are between these two movement markers is less than or equal to 4,
b) the modification of movement markers indicating a movement into movement markers indicating a short stop when the time markers associated with them indicate that they are preceded and followed by movement markers indicating a short stop and when the time markers associated with the latter indicate a duration shorter than a first threshold,
c) the modification of movement markers indicating a movement into movement markers indicating a short stop when the time markers associated with them indicate that they are preceded and followed by movement markers indicating a short stop which are associated with the same localization cell and when the time markers associated with the latter indicate a duration shorter than a second threshold,
d) the modification of movement markers indicating a short stop into movement markers indicating a movement when the time markers associated with them indicate that they are preceded and followed by movement markers indicating a movement and when the time markers associated with the latter indicate a duration shorter than a third threshold, the analyzer being furthermore arranged to apply, after applying at least one of rules a), b), c) and d), the following rule:
e) the merging of movement markers indicating a short stop whose time markers indicate that they are consecutive, and the association with the resulting movement marker of the localization cell associated with the movement markers whose time markers represent the longest duration and of a time marker corresponding to the sum of the durations of the associated time markers,
- an extractor (12) configured for determining, from amongst the trajectory data, pairs of movement markers associated with the same communications mobile device identifier the time markers of which and the associated localization cells of which define a duration exceeding a first threshold and a distance exceeding a second threshold, and, for a given pair of movement markers, for grouping into a candidate set the signaling data associated with the corresponding communications mobile device identifier and the time markers of which are included between the two time markers of the given pair of movement markers,
- a detector (14) configured for determining, within a given candidate set, whether signaling data associated with time markers meet one of the following conditions:
I) the signaling data define a movement speed greater than a third threshold, and the corresponding time markers are separated by a time period greater than a fourth threshold,
II) the time markers of the signaling data are separated by a time period greater than a fifth threshold greater than the fourth threshold, the associated signaling identifiers indicate an absence of activity, the signaling data define a movement speed greater than the speed defined by the division of the first threshold by the second threshold,
the detector (14) being configured, when one of the conditions I) and II) is met, for returning classified movement data (16) associating data on movement type and departure and arrival data determined from the localization cells associated with the signaling data and from a group of chosen locations.

2. The device as claimed in claim 1, in which, when the condition II) is met, the detector (14) is configured for verifying that the associated localization cells or those of signaling data the time markers of which are close in time designate a location belonging to a group of chosen locations before returning classified movement data (16).

3. The device as claimed in one of the preceding claims, in which the classifier (6) and the analyzer (8) are configured so as to be called up sequentially for producing trajectory data.

4. The device as claimed in one of the preceding claims, in which the analyzer (8) is configured for applying the rule a) before applying the rule b) and/or the rule b) before applying the rule c), and/or the rule c) before applying the rule d).

5. The device as claimed in one of the preceding claims, in which the detector (14) is configured for determining whether one of the conditions I) and II) applies to signaling data situated between time markers associated with classified movement data, and for repeating this determination on the resulting classified movement data until neither of the conditions I) and II) is met.

6. A trajectory determining method comprising the following operations:
a) receive signaling data associating communications mobile device identifiers, time markers and signaling identifiers, at least some of the signaling identifiers designating a localization cell,
b) for a given communications mobile device identifier, mark the signaling data associated with it with a movement marker indicating a state chosen from amongst a list comprising at least one movement and one short stop,
c) process the signaling data marked according to movement markers in order to produce trajectory data associating, on the one hand, a given communications mobile device identifier and, on the other, a series of movement markers each associated with a localization cell and with a time marker, such that two movement markers whose time markers indicate that they are consecutive indicate two movements or indicate at most one short stop, by applying at least one of the following rules:
c1) the modification of any given movement markers into movement markers indicating a short stop, when, for two movement markers indicating a short stop associated with a single localization cell, the number of movement markers whose time markers indicate that they are between these two movement markers is less than or equal to 4,
c2) the modification of movement markers indicating a movement into movement markers indicating a short stop when the time markers associated with them indicate that they are preceded and followed by movement markers indicating a short stop and when the time markers associated with the latter indicate a duration shorter than a first threshold,
c3) the modification of movement markers indicating a movement into movement markers indicating a short stop when the time markers associated with them indicate that they are preceded and followed by movement markers indicating a short stop which are associated with the same localization cell and when the time markers associated with the latter indicate a duration shorter than a second threshold,
c4) the modification of movement markers indicating a short stop into movement markers indicating a movement when the time markers associated with them indicate that they are preceded and followed by movement markers indicating a movement and when the time markers associated with the latter indicate a duration shorter than a third threshold, and
after applying at least one of rules c1) to c4), by applying the following rule:
c5) the merging of movement markers indicating a short stop whose time markers indicate that they are consecutive, and the association with the resulting movement marker of the localization cell associated with the movement mark whose time markers represent the longest duration and of a time marker corresponding to the sum of the durations of the associated time markers,
d) determine, from the trajectory data, pairs of movement markers associated with the same communications mobile device identifier the time markers of which and the associated localization cells of which define a duration exceeding a first threshold and a distance exceeding a second threshold, and, for a given pair of movement markers, for grouping into a candidate set the signaling data associated with the corresponding communications mobile device identifier and the time markers of which are included between the two time markers of the given pair of movement markers,
e) determine, within a given candidate set, whether signaling data associated with time markers meets one of the following conditions:
I) the signaling data define a movement speed greater than a third threshold, and the corresponding time markers are separated by a time period greater than a fourth threshold,
II) the time markers of the signaling data are separated by a time period greater than a fifth threshold greater than the fourth threshold, the associated signaling identifiers indicate an absence of activity, the signaling data define a movement speed greater than the speed defined by the division of the first threshold by the second threshold,
f) when one of the conditions I) and II) is met, return classified movement data (16) associating data on movement type and departure and arrival data determined from the localization cells associated with the signaling data and from a group of chosen locations.

7. The method as claimed in claim 6, in which the condition II) furthermore comprises verifying that the associated localization cells or those of signaling data the time markers of which are close in time designate a location belonging to a group of chosen locations before returning classified movement data (16).

8. The method as claimed in either of claims 6 or 7, in which the operation c) applies the rule c1) before the rule c2), and/or the rule c2) before applying the rule c3), and/or the rule c3) before applying the rule c4).

9. The method as claimed in one of claims 6 to 8, in which the operations c), d), e) and f) are carried out in this order.

10. The method as claimed in one of claims 6 to 9, in which the operation e) is repeated on signaling data situated between time markers associated with classified movement data, and also on the resulting classified movement data, until neither of the conditions I) and II) is met.

11. A computer program product comprising portions of program code for implementing the method as claimed in one of claims 6 to 10 when the said program is executed on a computer.
